Europäisches Patentamt

European Patent Office

Office européen des brevets

(11) Numéro de publication: **0 345 170**
A1

# DEMANDE DE BREVET EUROPEEN

(21) Numéro de dépôt: **89401532.0**

(22) Date de dépôt: **02.06.89**

(51) Int. Cl.⁴: **B 65 G 69/28**
E 04 G 1/15

(30) Priorité: **03.06.88 FR 8807429**

(43) Date de publication de la demande:
**06.12.89 Bulletin 89/49**

(84) Etats contractants désignés:
**BE DE ES FR GB IT**

(71) Demandeur: **S.A. CABINES DENIZET Société Anonyme**
**Zone Industrielle Sud**
**F-28390 Toury (FR)**

(72) Inventeur: **Desvigne, Jean-Claude**
**7 Avenue du Château**
**F-91190 Gif sur Yvette (FR)**

(74) Mandataire: **Bruder, Michel**
**Cabinet Michel Bruder Conseil en Brevets 10, rue de la**
**Pépinière**
**F-75008 Paris (FR)**

(54) **Poutre de roulement.**

(57) La présente invention concerne une poutre de roulement à haute adhérence, comportant au moins une semelle supérieure (1) constituée par une tôle mince.

Cette poutre est caractérisée en ce que la tôle mince constituant la semelle supérieure (1) est percée d'une pluralité d'alvéoles à bords vifs ou extrusions (6) en saillie vers le haut.

Fig. 1

EP 0 345 170 A1

**Description**

La présente invention concerne une poutre de roulement utilisable notamment pour le transfert, suivant un plan incliné, de mobiles à roues ou chenilles, cette poutre servant de liaison entre la partie haute et la partie basse qui sont à relier.

De telles poutres de roulement servent en particulier, entre autres utilisations, à permettre la descente de véhicules à partir du plateau d'un wagon jusqu'au sol et inversement, lorsqu'il n'existe pas de quai à la hauteur du plateau du wagon. Comme ces poutres doivent être considérées comme des moyens de transfert de dépannage, elles doivent avoir une structure la plus légère possible afin de pouvoir être mise en place par des hommes, sans moyens de manutention.

Lorsque ces poutres de roulement doivent être placées dans une position inclinée, leurs surfaces supérieures de roulement doivent présenter des aspérités empêchant la glissade sur la poutre des organes de roulement, telles que roues ou chenilles, des mobiles pendant leur montée ou leur descente sur la poutre. Par ailleurs comme ces poutres de roulement sont construites pour de nombreuses années de durée de vie et qu'elles sont normalement stockées et utilisées à l'extérieur de bâtiments, elles doivent résister aux agressions climatiques, à la fragilité à basse température, au vieillissement prématuré dû à l'action des rayonnements naturels et à la fatigue en utilisation. Egalement, comme elles peuvent être endommagées accidentellement en cours de manutention et d'utilisation, leur structure et le matériau utilisé doivent permettre une réparation rapide et facile.

Actuellement ces poutres de roulement sont réalisées en éléments à base d'alliages légers, en utilisant soit des tôles soudées, rivées ou boulonnées, soit des pièces venant de fonderie. soit encore en utilisant une combinaison de pièces de fonderie et de tôles. Leur surface supérieure de roulement est revêtue de barrettes judicieusement réparties afin d'éviter le glissement des roues ou chenilles.

Une telle conception des poutres de roulement leur assure une légèreté et une résistance aux conditions climatiques. Toutefois la médiocre résistance au vieillissement et la fatigue des alliages légers mécanosoudés est un problème important. La réparation des pièces en alliage léger nécessite également des moyens et des précautions plus importants que pour des réalisations en acier. Enfin l'utilisation des alliages légers peut donner au matériel un niveau de prix prohibitif.

On connaît déjà, ainsi qu'il est décrit dans le brevet GB-A-2 012 851, une plaque métallique, formant un élément de plancher, laquelle est constituée par une tôle mince percée d'une pluralité de trous dont certains ont leurs bords vifs repoussés vers le haut et d'autres ont leurs bords repoussés vers le bas. Une telle plaque ne peut toutefois constituer, même avec l'adjonction d'éléments de renfort, tels que des tubes transversaux, une poutre de roulement capable de supporter des charges très élevées.

La présente invention vise à remédier à ces inconvénients en procurant une poutre de roulement de conception simple, légère, résistante et assurant une bonne adhérence d'un organe roulant sur elle.

A cet effet cette poutre de roulement à haute adhérence constituée par un caisson de section droite rectangulaire comprenant deux semelles parallèles entre elles, à savoir une semelle supérieure et une semelle inférieure, est caractérisée en ce que la semelle supérieure est constituée par une tôle mince percée d'une pluralité d'alvéoles à bord vifs ou extrusions en saillie vers le haut.

La poutre de roulement est avantageusement constituée d'éléments mécanosoudés en tôle fine d'acier inoxydable sous l'effet des agents atmosphériques.

La poutre de roulement suivant l'invention offre l'avantage que les alvéoles à bords vifs, extrudées vers l'extérieur dans la ou les semelles de la poutre non seulement s'opposent au glissement mais encore contribuent à augmenter l'épaisseur de résistance mécanique et ceci en réduisant le poids de matériau utilisé comparativement à une semelle épaisse revêtue de barrettes. Elle présente un moment d'inertie très élevé, tout en étant d'un poids relativement faible, nettement inférieur à celui d'une poutre à semelles en tôles épaisses.

On décrira ci-après, à titre d'exemple non limitatif, une forme d'exécution de la présente invention, en référence au dessin annexé sur lequel

La figure 1 est une vue en coupe verticale et longitudinale d'une poutre de roulement suivant l'invention.

La figure 2 est une en plan partielle de la poutre de roulement de la figure 1.

La figure 3 est une vue en coupe transversale faite suivant la ligne III-III de la figure 2.

La figure 4 est une vue en coupe transversale d'une variante d'exécution de la poutre de roulement.

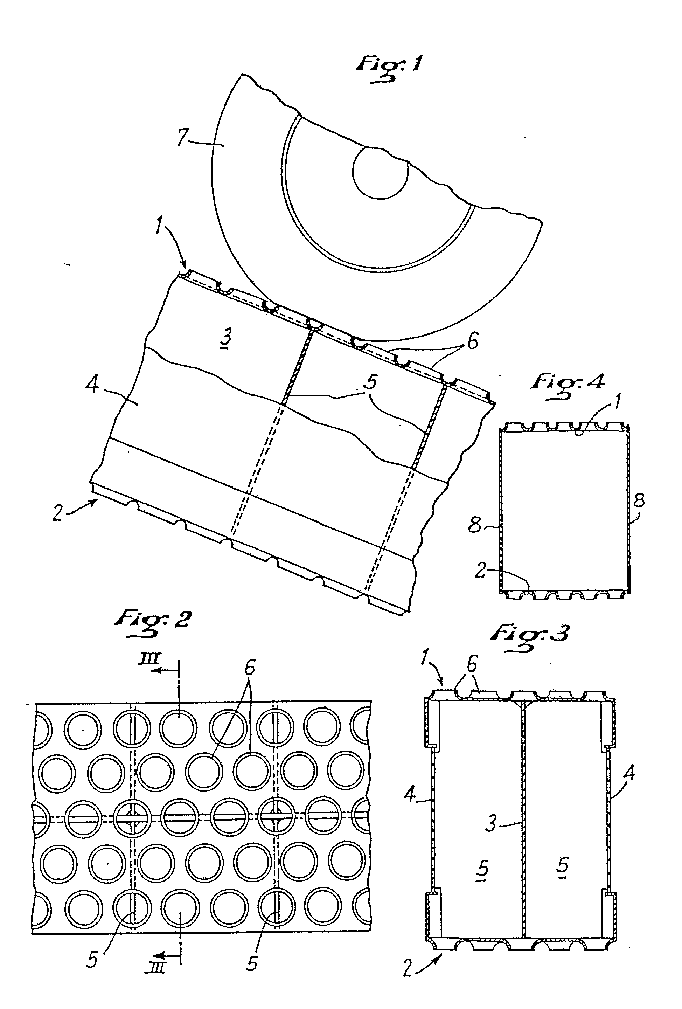

La poutre de roulement représentée sur les figures 1 à 3, est constituée par un caisson de section droite rectangulaire comprenant deux semelles parallèles entre elles, à savoir une semelle supérieure 1 et une semelle inférieure 2, reliées par une âme centrale verticale et longitudinale 3 qui est perpendiculaire aux deux semelles 1 et 2 et dont les bords supérieur et inférieur sont respectivement soudés à ces semelles, en leurs milieux. Les semelles 1,2 sont constituées respectivement par des profilés de même section droite en forme de C, tournés l'un vers l'autre, et les extrémités des "C" sont reliées entre elles par des tôles verticales latérales 4, s'étendant longitudinalement et qui leur sont soudées. Des tôles transversales 5 sont également soudées, le long de leurs côtés, aux deux semelles 1,2, à l'âme centrale 3 et aux tôles latérales 4 afin de contribuer à la rigidification de l'ensemble de la poutre de roulement.

Suivant l'invention chacune des semelles 1 et 2 présente des saillies 6 s'étendant vers l'extérieur et entourant des trous percés dans la tôle de la semelle. Chacune des saillies 6 peut avoir une forme circulaire ou autre. Les saillies 6 sont régulièrement réparties en colonnes longitudinales et rangées transversales, éventuellement en quin conce comme on peut mieux le voir sur la figure 2. Elles sont constituées par des extrusions c'est-à dire qu'elles sont formées par des alvéoles à bords vifs prévues dans les tôles constituant les semelles 1 et 2 et dont les bords sont refoulés vers l'extérieur par déformation plastique. De ce fait chaque extrusion 6 présente une forme sensiblement tronconique et elle constitue une aspérité favorisant l'adhérence d'un organe de roulement d'un mobile se déplaçant sur la poutre. Sur la figure 1 est représentée une roue 7 d'un véhicule dont le pneumatique est pressé au contact des extrusions 6 et adhére fortement à celles-ci.

Les extrusions 6 de chaque semelle qui s'étendent vers l'extérieur par rapport au plan de cette semelle, permettent d'augmenter l'épaisseur de résistance mécanique de la semelle tout en assurant l'adhérence de l'organe de roulement 7. Elles permettent également une fabrication simple de l'âme centrale 3 pour un montage facile par soudage de la poutre.

Comme il a été indiqué précédemment la semelle inférieure 2 est de préférence réalisée de la même façon que la semelle supérieure 1, c'est-à-dire qu'elle présente elle aussi des extrusions 6. Ceci permet de bénéficier aussi du gain de poids sur la semelle inférieure tout en ayant une bonne résistance mécanique de la poutre.

Il va de soi que, bien que la poutre de roulement suivant l'invention ait été conçue plus particulièrement pour être utilisée dans une position inclinée, elle peut être également employée pour réaliser une passerelle ou un pont au-dessus d'une brèche, c'est-à-dire en position horizontale.

Dans la variante d'exécution représentée sur la figure 4 le caisson constituant la poutre de roulement, de section droite rectangulaire, comprend deux âmes latérales verticales 8 soudées à leurs extrémités supérieures et inférieures, aux semelles supérieure 1 et inférieure 2 constituées par des tôles planes percées des alvéoles à bords vifs tournés vers l'extérieur.

## Revendications

1.- Poutre de roulement à haute adhérence, compor tant au moins une tôle mince, constituée par un caisson de section droite rectangulaire comprenant deux semelles parallèles entre elles, à savoir une semelle supérieure (1) et une semelle inférieure (2) caractérisée en ce que la semelle supérieure (1) est constituée par une tôle mince percée d'une pluralité d'alvéoles à bords vifs ou extrusions (6) en saillie vers le haut.

2.- Poutre de roulement suivant la revendication 1 caractérisée en ce que la semelle inférieure (2) est constituée par une tôle mince présentant une pluralité d'alvéoles à bords vifs ou extrusions (6) en saillie vers le bas.

3.- Poutre de roulement suivant l'une quelconque des revendications précédentes caractérisée en ce que les semelles supérieure (1) et inférieure (2) sont reliées par une âme centrale verticale et longitudinale (3) qui est perpendiculaire au deux semelles (1) et (2) et dont les bords supérieur et inférieur sont respectivement soudés à ces semelles, en leurs milieux.

4.- Poutre de roulement suivant la revendication 3 caractérisée en ce que les semelles (1,2) sont constituées respectivement par des profilés de même section droite en forme de C, tournés l'un vers l'autre, les extrémités des "C" sont reliées entre elles par des tôles verticales latérales (4), s'étendant longitudinalement et qui leur sont soudées, et des tôles transversales (5) sont également soudées, le long de leurs côtés, aux deux semelles (1,2), à l'âme centrale (3) et aux tôles latérales (4).

EP 0 345 170 A1

*Fig:1*

*Fig:2*

*Fig:3*

*Fig:4*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | GB-A-2 012 851  (LAYHRR)<br>* En entier *<br>--- | 1-4 | B 65 G   69/28<br>E 04 G    1/15 |
| Y | DE-B-2 250 122  (WAGGON UNION)<br>* En entier *<br>----- | 1-4 | |

|  | DOMAINES TECHNIQUES RECHERCHES (Int. Cl.4) |
|---|---|
|  | B 65 G<br>E 04 G |

**Le présent rapport a été établi pour toutes les revendications**

| Lieu de la recherche | Date d'achèvement de la recherche | Examinateur |
|---|---|---|
| LA HAYE | 21-07-1989 | WERNER D.M. |